# FASCICULE DE BREVET EUROPEEN

(11) **EP 1 345 681 B1**
(45) Date de publication et mention de la délivrance du brevet: **30.03.2011**
(21) Numéro de dépôt: 01999426.8
(22) Date de dépôt: 07.12.2001
(51) Int. Cl.: B01J 13/00

(54) **DISPERSION COLLOIDALE DE PHOSPHATE DE TERRE RARE ET PROCEDE DE PREPARATION**
DISPERSION KOLLOIDALE VON PHOSPHATEN VON SELTENEN ERDEN SOWIE IHRE HERSTELLUNGSVERFAHREN
RARE EARTH PHOSPHATE COLLOIDAL DISPERSION AND PREPARATION METHOD

(30) Priorité: 08.12.2000 FR 0016005
(43) Date de publication de la demande: 24.09.2003
(73) Titulaire: Rhodia Electronics and Catalysis, 17041 La Rochelle Cedex (FR)
(72) Inventeur: CHANE-CHING, Jean-Yves, F-95600 Eaubonne (FR)
(74) Mandataire: Dubruc, Philippe
(86) Numéro de dépôt international: PCT/FR2001/003875
(87) Numéro de publication internationale: WO 2002/045841

(56) Documents cités:
- EP-A- 0 308 311
- WO-A-00/76918
- US-A- 2 082 233
- US-A- 3 516 807
- PENG CHEN ET AL: "Synthesis and characterization of lanthanum phosphate sol for fibre coating" JOURNAL OF MATERIALS SCIENCE, CHAPMAN AND HALL LTD. LONDON, GB, vol. 32, no. 14, 15 juillet 1997 (1997-07-15), pages 3863-3867, XP002129771 ISSN: 0022-2461

## Description

La présente invention concerne une dispersion colloïdale de phosphate de terre rare et son procédé de préparation.

Les domaines de la luminescence et de l'électronique connaissent actuellement des développements importants. On peut citer comme exemple de ces développements, la mise au point des systèmes à plasma (écrans et lampes) pour les nouvelles techniques de visualisation et d'éclairage. Ces nouvelles applications nécessitent des matériaux luminophores présentant des propriétés de plus en plus améliorées. Ainsi, outre leur propriété de luminescence, on demande à ces matériaux des caractéristiques spécifiques de morphologie ou de granulométrie afin de faciliter notamment leur mise en oeuvre dans les applications recherchées.

Plus précisément, il est demandé d'avoir des luminophores se présentant sous la forme de particules le plus possible individualisées et de taille très fine.

Les sols ou dispersions colloïdales peuvent constituer une voie d'accès intéressante à un tel type de produits.

La présente invention a pour objet de fournir un sol utilisable notamment dans les domaines de la luminescence et de l'électronique et à partir duquel on peut obtenir des produits fins et bien désagglomérés.

Le document WO 00/76918 décrit des dispersions colloïdales d'un phosphate de terre rare mais cette description se limite aux phosphates de cérium, de lanthane ou de cérium et de lanthane. Le document EP-A-308311 décrit des sols de composés de terre rare mais il s'agit d'hydroxydes et non pas de phosphates de terre rare.

Dans ce but, la dispersion colloïdale de l'invention comprend des particules de phosphate d'au moins une terre rare et un anion d'un acide monovalent, soluble dans l'eau et présentant un pKa d'au moins 2,5, et elle est caractérisée en ce que les particules sont anisotropes, de forme aciculaire et présentant un rapport longueur/largeur d'au moins 10, et désagglomérées ou désagglomérables et en ce que pour une concentration comprise entre 2% et 10% en poids, la dispersion présente une propriété de bi-réfringence, les dispersions colloïdales de particules de phosphate de cérium, de phosphate de lanthane et de phosphate de cérium et de lanthane étant exclues.

L'invention concerne aussi un procédé de préparation de cette dispersion qui comprend les étapes suivantes :
- on mélange une solution d'un sel d'au moins une terre rare avec des ions phosphates en contrôlant le pH du milieu de réaction à une valeur comprise entre 4 et 9 et en présence d'un acide monovalent, soluble dans l'eau et présentant un pKa d'au moins 2,5;
- on sépare le précipité du milieu de réaction;
- on remet en dispersion dans l'eau ledit précipité.

Les particules de la dispersion de l'invention peuvent présenter une morphologie homogène et bien individualisée ce qui rend la dispersion particulièrement utile pour des applications mettant en oeuvre des luminophores.

D'autres caractéristiques, détails et avantages de l'invention apparaîtront encore plus complètement à la lecture de la description qui va suivre.

Par terre rare on entend pour l'ensemble de la description les éléments du groupe constitué par l'yttrium et les éléments de la classification périodique de numéro atomique compris inclusivement entre 57 et 71.

L'invention s'applique à des dispersions ou des sols de phosphate d'une ou plusieurs terres rares. On entend ici des particules à base essentiellement d'orthophosphates de formule LnPO₄, Ln désignant une ou plusieurs terres rares.

Par ailleurs, pour la suite de la description, l'expression dispersion colloïdale ou sol d'un phosphate de terre rare désigne tout système constitué de fines particules solides de dimensions colloïdales à base généralement d'un phosphate de terre rare au sens donné ci-dessus, qui peut être hydraté, et en suspension dans une phase liquide aqueuse. Ces particules peuvent en outre contenir un certaine quantité de l'anion de l'acide monovalent précités. Elles peuvent aussi, éventuellement, contenir des quantités résiduelles d'ions liés ou adsorbés qui peuvent provenir des sels de terre rare utilisés dans la préparation de la dispersion tels que par exemple des anions nitrates, acétates, chlorures, citrates, ammoniums ou des ions sodium ou encore des anions phosphates (HPO₄²⁻, PO₄³⁻, P₃O₁₀⁵⁻...). On notera que dans de telles dispersions, la terre rare peut se trouver soit totalement sous la forme de colloïdes, soit simultanément sous la forme d'ions et de colloïdes. De préférence, au moins 80% de la terre rare se trouve sous forme colloïdale.

La phase liquide aqueuse peut comprendre aussi l'acide monovalent ou l'anion de cet acide, les anions précités des sels de terre rare et des ions phosphates sous diverses formes.

La présente invention s'applique tout particulièrement au cas où la terre rare est le lanthane, le cérium, le praséodyme, le gadolinium ou l'yttrium. Elle s'applique aussi en particulier aux dispersions colloïdales de phosphates ternaires de lanthane, de cérium et de terbium. Pour ces phosphates ternaires, on peut citer plus particulièrement ceux de formule LaₓCe_{y}Tb_{1-x-y}PO₄ dans laquelle x est compris inclusivement entre 0,4 et 0,7 et x+y est supérieur à 0,7. L'invention s'applique aussi notamment aux phosphates mixtes de lanthane et d'europium ou encore de lanthane et de thulium ou de lanthane, de thulium et de gadolinium. Pour les phosphates contenant du thulium, la teneur en thulium, exprimée en % atomique par rapport au lanthane, peut être comprise notamment entre 0,1 et 10, plus particulièrement entre 0,5 et 5 et pour ceux contenant du gadolinium, la teneur en ce dernier élément, exprimée en % atomique par rapport au lanthane, peut varier par exemple entre 10 et 40%.

Les concentrations des dispersions de l'invention sont généralement d'au moins 15g/l (5% en poids), elles peuvent être comprises entre 20 et 100g/l (2% et 10% en poids) notamment, concentrations exprimées en concentration équivalente en oxyde de terre rare. La concentration est déterminée après séchage et calcination sous air d'un volume donné de dispersion.

Les particules du sol ou de la dispersion de l'invention ont une forme spécifique et homogène. Ainsi, elles sont anisotropes en ce qui concerne leur morphologie. Plus précisément, elles ont une forme aciculaire.

Elles peuvent présenter plus particulièrement un rapport longueur/largeur d'au moins 10. Ce rapport peut être d'au moins 30 et de préférence d'au moins 50. Elles peuvent aussi présenter une longueur d'au moins 50nm et notamment comprise entre 50nm et 600nm. Elles peuvent avoir une largeur d'au plus 10nm, plus particulièrement d'au plus 5nm.

Les tailles données ci-dessus sont déterminées par analyse par METHR (Microscopie Electronique par Transmission à Haute Résolution), complétée si nécessaire par cryo-microscopie.

Outre leur faible taille, les colloïdes des dispersions de l'invention sont peu ou pas agglomérés. Les analyses par cryo-microscopie électronique à transmission sur échantillons congelés (technique Dubochet) montrent un taux d'agglomération de colloïdes faible, par exemple inférieur à 40%, plus particulièrement inférieur à 10% voire inférieur à 5% en nombre, c'est à dire que sur l'ensemble des objets ou particules que l'on observe, au moins 60%, plus particulièrement 90% et encore plus particulièrement au moins 95% sont constitués d'un seul cristallite.

Dans certains cas correspondant à des dispersions de concentration élevée, les particules peuvent ne pas présenter le taux de désagglomération donné ci-dessus, toutefois, elles peuvent être désagglomérées par simple dilution en ramenant la dispersion dans la gamme de concentration donnée plus haut ou vers les valeurs basses de cette gamme.

Cet état de désagglomération des particules peut aussi être mis en évidence indirectement. En effet, pour une concentration comprise entre 2% et 10% en poids telle que définie plus haut, les dispersions de l'invention présentent une propriété de bi-réfringence qui peut être mise en évidence par positionnement d'un échantillon de la dispersion entre des polariseurs croisés. Cette bi-réfringence est due à la très bonne désagglomération des particules qui permet leur alignement. Comme précédemment, en cas de concentration élevée et en l'absence de biréfringence, il est possible de faire apparaître cette bi-réfringence par dilution de la dispersion.

Une autre caractéristique des dispersions de l'invention est qu'elles comprennent un anion d'un acide monovalent, soluble dans l'eau et présentant un pKa d'au moins 2,5. Plus particulièrement, l'acide peut présenter un pKa d'au plus 5. Comme acide convenable, on peut citer l'acide acétique, l'acide formique, l'acide propionique, l'acide monochloroacétique. Un acide préféré est l'acide acétique. Plusieurs acides monovalents peuvent être présents dans la même dispersion.

Le taux d'acide monovalent, exprimé en nombre de moles d'acide monovalent par rapport au nombre d'atomes de terre rare est généralement d'au plus 0,1, de préférence d'au plus 0,05. Un tel taux s'applique à la somme des acides si plusieurs acides sont présents dans la dispersion.

Ce taux d'acide est déterminé par dosage chimique du carbone et de la terre rare des colloïdes récupérés après ultracentrifugation à 50000t/mn pendant 6 heures.

Le procédé de préparation des dispersions de l'invention va maintenant être décrit.

Comme indiqué plus haut, le procédé comprend une première étape dans laquelle on fait réagir une solution d'un sel d'au moins une terre rare avec des ions phosphates. Dans le cas de la préparation d'un phosphate de plusieurs terres rares, la solution de départ comprend les sels de toutes les terres rares concernées.

Les sels peuvent être des sels d'acides inorganiques ou organiques, par exemple du type sulfate, nitrate, chlorure ou acétate. On notera que le nitrate et l'acétate conviennent particulièrement bien. Comme sels de cérium, on peut utiliser plus particulièrement l'acétate de cérium III, le chlorure de cérium III ou le nitrate de cérium III ou de cérium IV ainsi que des mélanges de ces sels comme des mixtes acétate/ chlorure.

Les ions phosphates peuvent être apportés par des composés purs ou en solution, comme par exemple l'acide phosphorique, les phosphates d'alcalins ou d'autres éléments métalliques. On peut mentionner à ce sujet le mono- ou dihydrogénophosphate de sodium. Les ions phosphates sont ajoutés de préférence sous forme d'une solution d'un phosphate d'ammonium qui peut être plus particulièrement le phosphate diammonique ou monoammonique.

La réaction entre le sel de terre rare et les ions phosphates se fait en présence de l'acide monovalent. Par ailleurs, cette réaction se fait en contrôlant le pH du milieu de réaction à une valeur comprise entre environ 4 et environ 9, de préférence entre 5 et 8,5.

Par contrôle du pH, on entend un maintien du pH du milieu de réaction à une certaine valeur, constante ou sensiblement constante, par addition de composés basiques ou de solutions tampons, dans le milieu. Le pH du milieu variera ainsi d'au plus 0,5 unité de pH autour de la valeur de consigne fixée, et de préférence encore d'au plus 0,1 unité de pH autour de cette valeur.

Le contrôle du pH est avantageusement réalisé par addition d'un composé basique. Comme composé basique convenable, on peut citer, à titre d'exemples, les hydroxydes métalliques (NaOH, KOH, CaOH₂,....) ou l'hydroxyde d'ammonium, ou tout autre composé basique dont les espèces le constituant ne formeront aucun précipité lors de leur addition dans le milieu réactionnel, par combinaison avec une des espèces par ailleurs contenues dans ce milieu, et permettant un contrôle du pH du milieu de précipitation. Un composé basique préféré de l'invention est l'ammoniac, mis en oeuvre avantageusement sous forme de solution aqueuse.

Selon un mode de réalisation particulier, le mélange ou la réaction entre le sel de terre rare et les ions phosphates peut se faire en introduisant la solution de sel de terre rare dans une seconde solution contenant les ions phosphates. Simultanément à cette introduction, on ajoute au milieu réactionnel un composé basique du type qui vient d'être décrit pour contrôler le pH. Enfin, la solution contenant les ions phosphates peut être une solution d'acide phosphorique qui, de préférence, a été préalablement neutralisée à un pH compris entre 5 et 8,5.

On obtient à l'issue de cette première étape du procédé un précipité.

Selon une variante du procédé de l'invention, le milieu obtenu à l'issue de la première étape du procédé peut subir un mûrissement. Ce mûrissement se fait de préférence en chauffant le milieu à une température d'au moins 30°C, de préférence d'au moins 50°C. A titre d'exemple, cette température peut être comprise entre 30°C et 180°C.

Ce mûrissement peut être conduit, selon les conditions de températures retenues, soit sous pression normale atmosphérique, soit sous pression telle que par exemple la pression de vapeur saturante correspondant à la température du mûrissement. Lorsque la température de mûrissement est choisie supérieure à la température de reflux du mélange réactionnel (c'est à dire généralement supérieure à 100°C), on conduit alors l'opération en introduisant le mélange aqueux dans une enceinte close (réacteur fermé plus couramment appelé autoclave), la pression nécessaire ne résultant alors que du seul chauffage du milieu réactionnel (pression autogène). Dans les conditions de températures données ci-dessus, et en milieux aqueux, on peut ainsi préciser, à titre illustratif, que la pression dans le réacteur fermé varie entre une valeur supérieure à 1 Bar (10⁵Pa) et 165 Bar (165. 10⁵Pa), de préférence entre 1 Bar (5. 10⁵ Pa) et 20 Bar (100. 10⁵ Pa). Il est bien entendu également possible d'exercer une pression extérieure qui s'ajoute alors à celle consécutive au chauffage.

Le mûrissement peut être conduit soit sous atmosphère d'air, soit sous atmosphère de gaz inerte, de préférence l'azote dans ce cas.

La durée du mûrissement n'est pas critique, et peut ainsi varier dans de larges limites, par exemple entre 1 et 48 heures, de préférence entre 2 et 24 heures.

Le précipité obtenu à l'issue de la première étape du procédé ou, éventuellement, du mûrissement, peut être séparé du milieu réactionnel par tout moyen convenable, notamment par filtration. Le produit est ensuite remis en dispersion dans l'eau et on obtient ainsi la dispersion ou le sol de phosphate de terre rare selon l'invention. Avantageusement, le précipité issu de la réaction peut être lavé. Ce lavage peut se faire en remettant dans l'eau le précipité puis, après agitation, en séparant le solide du milieu liquide par centrifugation par exemple. Cette opération peut être répétée plusieurs fois si nécessaire.

La dispersion obtenue après remise en suspension dans l'eau peut en outre être purifiée et/ou concentrée par ultrafiltration.

De manière à augmenter la stabilité de la dispersion ainsi obtenue, il est possible d'ajouter au précipité au moment de la remise en dispersion dans l'eau un acide comme par exemple l'acide nitrique, l'acide acétique, l'acide formique ou l'acide citrique.

Les dispersions de l'invention peuvent être utilisées dans de nombreuses applications. On peut citer la catalyse notamment. Les dispersions peuvent aussi être employées pour la lubrification et dans les céramiques. En outre, ces dispersions peuvent entrer dans la composition de suspensions pour polissage. Ces suspensions peuvent être utilisées au polissage du verre, par exemple dans l'industrie de la cristallerie, de la glacerie, du verre plat, des écrans de télévision, des lunettes, ou encore au polissage des matières céramiques ou autres matériaux de type vitreux. Ces suspensions peuvent aussi être utilisées tout particulièrement pour le polissage de type CMP dans l'industrie de l'électronique. Dans ce cas, elles sont particulièrement adaptées au polissage des substrats métalliques entrant dans la constitution des microprocesseurs, ces substrats pouvant être en cuivre, en aluminium, en nitrure de titane ou en tungstène.

En outre, compte tenu de la morphologie et de la finesse des particules colloïdales qui les constituent, ces dispersions sont particulièrement adaptées à une utilisation dans la préparation de composés luminophores ou dans la fabrication de dispositifs luminescents, du type écrans avec effet de champ ou systèmes à plasma ou à vapeur de mercure par exemple. La mise en oeuvre des luminophores dans la fabrication de ces dispositifs se fait selon des techniques bien connues par exemple par sérigraphie, électrophorèse ou sédimentation.

## Revendications

1. Dispersion colloïdale de particules de phosphate d'au moins une terre rare et qui comprend un anion d'un acide monovalent, soluble dans l'eau et présentant un pKa d'au moins 2,5, **caractérisée en ce que** les particules sont anisotropes, de forme aciculaire et présentant un rapport longueur/largeur d'au moins 10, et désagglomérées ou désagglomérables et **en ce que** pour une concentration comprise entre 2% et 10% en poids, la dispersion présente une propriété de bi-réfringence, à l'exception des dispersions colloïdales de particules de phosphate de cérium, de phosphate de lanthane et de phosphate de cérium et de lanthane.

2. Dispersion selon la revendication 1, **caractérisée en ce qu'**elle comprend un anion d'un acide monovalent, soluble dans l'eau et présentant un pKa d'au plus 5.

3. Dispersion selon la revendication 1 ou 2, **caractérisée en ce que** le phosphate est un phosphate d'une terre rare choisie parmi le praséodyme, le gadolinium ou l'yttrium.

4. Dispersion selon l'une des revendications précédentes, **caractérisée en ce que** les particules sont de forme aciculaire et présentent une longueur comprise entre 50nm et 600nm.

5. Dispersion selon l'une des revendications 1, 2 ou 4, **caractérisée en ce que** le phosphate de terre rare est un phosphate mixte de lanthane et d'europium ou encore de lanthane et de thulium ou de lanthane, de thulium et de gadolinium.

6. Dispersion selon l'une des revendications 1, 2 ou 4, **caractérisée en ce que** le phosphate de terre rare est un phosphate de lanthane, de cérium et de terbium.

7. Dispersion selon l'une des revendications 1 à 6, **caractérisée en ce que** l'acide monovalent précité est l'acide acétique.

8. Dispersion selon l'une des revendications 1 à 7, **caractérisée en ce que** au moins 90%, plus particulièrement au moins 95% des particules sont constitués d'un seul cristallite.

9. Procédé de préparation d'une dispersion selon l'une des revendications précédentes, **caractérisé en ce qu'**il comprend les étapes suivantes :
- on mélange une solution d'un sel d'au moins une terre rare avec des ions phosphates en contrôlant le pH du milieu de réaction à une valeur comprise entre 4 et 9 et en présence d'un acide monovalent, soluble dans l'eau et présentant un pKa d'au moins 2,5;
- on sépare le précipité du milieu de réaction;
- on remet en dispersion dans l'eau ledit précipité.

10. Procédé selon la revendication 9, **caractérisé en ce qu'**on effectue le mélange de la solution du sel d'au moins une terre rare avec les ions phosphates en introduisant ladite solution dans une seconde solution contenant les ions phosphates.

11. Procédé selon l'une des revendications 9 ou 10, **caractérisé en ce que** le contrôle du pH du milieu de réaction est réalisé par addition d'un composé basique à ce milieu.

12. Procédé selon la revendication 11, **caractérisé en ce que** ledit composé basique est l'hydroxyde d'ammonium.

13. Procédé selon l'une des revendications 10 à 12, **caractérisé en ce que** la seconde solution précitée est une solution d'acide phosphorique préalablement neutralisée à un pH compris entre 5 et 8,5.

14. Procédé selon l'une des revendications 9 à 13, **caractérisé en ce qu'**avant la séparation du précipité du milieu de réaction, on procède à un mûrissement de ce milieu.

15. Procédé selon la revendication 14, **caractérisé en ce qu'**on effectue le mûrissement précité à une température comprise entre 30°C et 180°C.

16. Procédé selon l'une des revendications 9 à 15, **caractérisé en ce qu'**on effectue la remise en dispersion dans l'eau dudit précipité en présence d'un acide.

## Claims

1. Colloidal dispersion of particles of phosphates of at least one rare earth, which dispersion includes an anion of a water-soluble monovalent acid having a pKa of at least 2.5, **characterized in that** the particles are anisotropic, of acicular shape with a length/width ratio of at least 10, and are deagglomerated or deagglomerable and **in that**, for a concentration of between 2% and 10% by weight, the dispersion has a birefringence property, with the exception of colloidal dispersions of cerium phosphate, lanthanum phosphate and cerium lanthanum phosphate particles.

2. Dispersion according to Claim 1, **characterized in that** it includes an anion of a water-soluble monovalent acid having a pKa of at most 5.

3. Dispersion according to Claim 1 or 2, **characterized in that** the phosphate is a phosphate of a rare earth chosen from praseodymium, gadolinium and yttrium.

4. Dispersion according to one of the preceding claims, **characterized in that** the particles are of acicular shape and have a length of between 50 nm and 600 nm.

5. Dispersion according to one of Claims 1, 2 and 4, **characterized in that** the rare-earth phosphate is a mixed lanthanum europium phosphate or a mixed lanthanum thulium phosphate or a mixed lanthanum thulium gadolinium phosphate.

6. Dispersion according to one of Claims 1, 2 and 4, **characterized in that** the rare-earth phosphate is a lanthanum cerium terbium phosphate.

7. Dispersion according to one of Claims 1 to 6, **characterized in that** the aforementioned monovalent acid is acetic acid.

8. Dispersion according to one of Claims 1 to 7, **characterized in that** at least 90%, more particularly at least 95%, of the particles consist of a single crystallite.

9. Method of preparing a dispersion according to one of the preceding claims, **characterized in that** it comprises the following steps:
- a solution of a salt of at least one rare earth is mixed with phosphate ions while controlling the pH of the reaction mixture to a value of between 4 and 9 and in the presence of a water-soluble monovalent acid having a pKa of at least 2.5;
- the precipitate is separated from the reaction mixture; and
- said precipitate is redispersed in water.

10. Method according to Claim 9, **characterized in that** the solution of the salt of at least one rare earth is mixed with the phosphate ions by introducing said solution into a second solution containing the phosphate ions.

11. Method according to either of Claims 9 and 10, **characterized in that** the pH of the reaction mixture is controlled by the addition of a basic compound to this mixture.

12. Method according to Claim 11, **characterized in that** said basic compound is ammonium hydroxide.

13. Method according to one of Claims 10 to 12, **characterized in that** the aforementioned second solution is a solution of phosphoric acid neutralized beforehand to a pH of between 5 and 8.5.

14. Method according to one of Claims 9 to 13, **characterized in that**, before the precipitate is separated from the reaction mixture, said mixture undergoes a maturation step.

15. Method according to Claim 14, **characterized in that** the aforementioned maturation step is carried out at a temperature of between 30°C and 180°C.

16. Method according to one of Claims 9 to 15, **characterized in that** said precipitate is redispersed in water in the presence of an acid.

## Patentansprüche

1. Kolloidale Dispersion von Teilchen aus Phosphat mindestens eines Seltenerdmetalls, die ein Anion einer einwertigen Säure, die wasserlöslich ist und einen pKa-Wert von mindestens 2,5 aufweist, enthält, **dadurch gekennzeichnet, daß** die Teilchen anisotrop und nadelförmig sind und ein Länge/Breite-Verhältnis von mindestens 10 aufweisen und desagglomeriert oder desagglomerierbar sind und die Dispersion für eine Konzentration zwischen 2 und 10 Gew.-% eine Doppelbrechungseigenschaft aufweist, mit Ausnahme von kolloidalen Dispersionen von Teilchen aus Cerphosphat, Lanthanphosphat und Cerlanthanphosphat.

2. Dispersion nach Anspruch 1, **dadurch gekennzeichnet, daß** sie ein Anion einer einwertigen Säure, die wasserlöslich ist und einen pKa-Wert von mindestens 5 aufweist, enthält.

3. Dispersion nach Anspruch 1 oder 2, **dadurch gekennzeichnet, daß** es sich bei dem Phosphat um ein Phosphat eines unter Praseodym, Gadolinium und Yttrium ausgewählten Seltenerdmetalls handelt.

4. Dispersion nach einem der vorhergehenden Ansprüche, **dadurch gekennzeichnet, daß** die Teilchen nadelförmig sind und eine Länge zwischen 50 nm und 600 nm aufweisen.

5. Dispersion nach einem der Ansprüche 1, 2 oder 4, **dadurch gekennzeichnet, daß** es sich bei dem Seltenerdmetallphosphat um ein Mischphosphat von Lanthan und Europium oder Lanthan und Thulium oder Lanthan, Thulium und Gadolinium handelt.

6. Dispersion nach einem der Ansprüche 1, 2 oder 4, **dadurch gekennzeichnet, daß** es sich bei dem Seltenerdmetallphosphat um ein Phosphat von Lanthan, Cer und Terbium handelt.

7. Dispersion nach einem der Ansprüche 1 bis 6, **dadurch gekennzeichnet, daß** es sich bei der obigen einwertigen Säure um Essigsäure handelt.

8. Dispersion nach einem der Ansprüche 1 bis 7, **dadurch gekennzeichnet, daß** mindestens 90% und insbesondere mindestens 95% der Teilchen aus einem einzigen Kristalliten bestehen.

9. Verfahren zur Herstellung einer Dispersion nach einem der vorhergehenden Ansprüche, **dadurch gekennzeichnet, daß** man:
- eine Lösung eines Salzes mindestens eines Seltenerdmetalls in Gegenwart einer einwertigen Säure, die wasserlöslich ist und einen pKa-Wert von mindestens 2,5 aufweist, mit Phosphationen mischt und den pH-Wert des Reaktionsmediums auf einen Wert zwischen 4 und 9 einstellt;
- den Niederschlag vom Reaktionsmedium abtrennt;
- den Niederschlag in Wasser redispergiert.

10. Verfahren nach Anspruch 9, **dadurch gekennzeichnet, daß** man das Mischen der Lösung des Salzes mindestens eines Seltenerdmetalls mit den Phosphationen durchführt, indem man die Lösung in eine zweite Lösung, die die Phosphationen enthält, einträgt.

11. Verfahren nach einem der Ansprüche 9 oder 10, **dadurch gekennzeichnet, daß** man die Einstellung des pH-Werts des Reaktionsmediums durch Zugabe einer basischen Verbindung zu diesem Medium bewerkstelligt.

12. Verfahren nach Anspruch 11, **dadurch gekennzeichnet, daß** es sich bei der basischen Verbindung um Ammoniumhydroxid handelt.

13. Verfahren nach einem der Ansprüche 10 bis 12, **dadurch gekennzeichnet, daß** es sich bei der obigen zweiten Lösung um eine vorher auf einen pH-Wert zwischen 5 und 8,5 neutralisierte Lösung von Phosphorsäure handelt.

14. Verfahren nach einem der Ansprüche 9 bis 13, **dadurch gekennzeichnet, daß** man vor der Abtrennung des Niederschlags vom Reaktionsmedium dieses Medium einer Alterung unterwirft.

15. Verfahren nach Anspruch 14, **dadurch gekennzeichnet, daß** man die obige Alterung bei einer Temperatur zwischen 30°C und 180°C durchführt.

16. Verfahren nach einem der Ansprüche 9 bis 15, **dadurch gekennzeichnet, daß** man das Redispergieren des Niederschlags in Wasser in Gegenwart einer Säure durchführt.
